# EUROPÄISCHE PATENTSCHRIFT

(11) **EP 3 529 503 B1**
(45) Veröffentlichungstag und Bekanntmachung des Hinweises auf die Patenterteilung: **09.08.2023**
(21) Anmeldenummer: 17794226.5
(22) Anmeldetag: 18.10.2017
(51) Int. Cl.: F16B 2/24, F16B 21/07, F16B 5/06

(54) **BEFESTIGER ZUM SICHERN EINES HALTEELEMENTS AN EINEM TRÄGER UND SYSTEM UMFASSEND EINEN BEFESTIGER UND EIN HALTEELEMENT**
FIXING ELEMENT FOR SECURING A RETAINING ELEMENT ON A SUPPORT AND SYSTEM COMPRISING A FIXING ELEMENT AND A RETAINING ELEMENT
DISPOSITIF DE FIXATION SERVANT À FIXER UN ÉLÉMENT DE RETENUE À UN SUPPORT ET SYSTÈME COMPORTANT UN DISPOSITIF DE FIXATION ET UN ÉLÉMENT DE RETENUE

(30) Priorität: 18.10.2016 DE 102016012437
(43) Veröffentlichungstag der Anmeldung: 28.08.2019
(73) Patentinhaber: A. Raymond et Cie. SCS, 38000 Grenoble (FR)
(72) Erfinder: DE JONG, Michael, 79588 Efringen-Kirchen (DE)
(74) Vertreter: König Szynka Tilmann von Renesse Patentanwälte Partnerschaft mbB Düsseldorf
(86) Internationale Anmeldenummer: PCT/EP2017/001225
(87) Internationale Veröffentlichungsnummer: WO 2018/072880

(56) Entgegenhaltungen:
- EP-A1- 0 873 916
- WO-A2-02/070905
- DE-A1-102009 041 130
- JP-A- H03 177 607
- US-A1- 2005 105 987

## Beschreibung

Die Erfindung betrifft einen Befestiger zum Sichern eines Halteelements an einem Träger und ein System umfassend einen derartigen Befestiger und ein Halteelement.

Aus DE 10 2007 045 296 B3 ist eine Vorrichtung zum Befestigen von zwei Anbauteilen an einem Trägerteil bekannt, mittels derer ein "Retainer" eines Airbags mit einem Trägerteil in Gestalt eines Karosseriebleches verbunden ist. Mit der aus der DE 10 2007 045 296 B3 bekannten Struktur der Vorrichtung ist eine hohe Auszugskraft des Retainers gegenüber dem Trägerteil möglich, wobei allerdings der Wunsch besteht, eine Möglichkeit der Variation einer Halte- und/oder Sicherungskraft des Retainers gegenüber dem Trägerteil vorzusehen, um flexibler diese Kraft einstellen bzw. variieren zu können.

DE10 2009 041130 A1, US 2005/105987 A1, JP H03-177607 A und WO 02/070905 A2 offenbaren einen Befestiger nach dem Oberbegriff des Anspruchs 1.

Vor diesem Hintergrund lag der Erfindung die Aufgabe zugrunde, einen Befestiger zum Sichern eines Halteelements an einem Träger zu schaffen, dessen Halte- und/oder Sicherungskraft in Bezug auf das Halteelement an dem Träger variabler eingestellt werden kann, um beispielsweise eine Bewegung des Halteelements gegenüber dem Träger besser kontrollieren zu können und/oder Anforderungen an die Sicherung des Halteelements genügen zu können.

Die Aufgabe wird durch den Befestiger gemäß Anspruch 1 gelöst. Vorteilhafte Ausführungsformen sind in den hiernach folgenden Unteransprüchen wiedergegeben.

Die Erfindung geht von dem Grundgedanken aus, dass am Befestiger ein Kanal vorgesehen ist, in den ein Abschnitt des Halteelements eingreifen kann, wobei zumindest teilweise im Kanal ein Kontaktbereich zum Kontakt mit dem Halteelement vorgesehen ist, mit dem das Halteelement zusätzlich zu einem am Befestiger vorgesehenen Eingriffsabschnitt gehalten werden kann. Hierdurch wird die Anzahl der Kontaktbereiche für das Halteelement, insbesondere unabhängig von möglichen vorhandenen Kontaktbereichen für das Haltelement, erhöht.

Dabei kann die erhöhte Anzahl von Kontaktmöglichkeiten mit dem Halteelement dazu genutzt werden, ein gestaffeltes Lösen des Halteelements vom Träger zu ermöglichen. So kann es vorgesehen sein, dass das Halteelement in einer bevorzugten Ausführungsform durch das Zusammenwirken des Eingriffsabschnitts und des Kontaktbereichs einerseits mit mindestens einem, vorzugsweise zwei innen in Richtung der Längsachse des Befestigers gegenüberliegenden, Rastabschnitten andererseits gehalten wird, beispielsweise dadurch, dass der Eingriffsabschnitt mit einer Kontaktfläche des Halteelements zusammenwirkt, deren Oberflächennormale eine Komponente aufweist, die in Richtung der Längsachse weist, und der Kontaktbereich mit einem Rastelement zusammenwirkt, dessen Oberflächennormale eine Komponente aufweist, die in die gleiche Richtung weist, während der zumindest eine Rastabschnitt mit einer Oberfläche des Trägers zusammenwirkt, dessen Oberflächennormale eine Komponente hat, die in Richtung der Längsachse, aber entgegengesetzt der entsprechenden Komponente der Oberflächennormale des Kontaktbereichs und des Rastelements weist. Durch Wahl der Ausrichtung und Lage sowie des Materials des Kontaktbereichs und/oder durch Wahl einer den Kontaktbereich in Richtung auf eine Vorzugslage vorspannenden Federkraft einerseits sowie durch Wahl der Ausrichtung und Lage sowie des Materials des Rastbereichs und/oder durch Wahl einer den Rastbereich in Richtung auf eine Vorzugslage vorspannenden Federkraft andererseits kann bei der Erfindung eingestellt werden, ob die Kraft, die notwendig ist, um das Rastelement in Richtung der Längsachse am Kontaktbereich vorbei zu bewegen, größer oder kleiner ist, als die Kraft, die notwendig ist, um den Rastbereich in Richtung der Längsachse an dem Träger vorbei zu bewegen. Ist die Kraft, die notwendig ist, um das Rastelement in Richtung der Längsachse am Kontaktbereich vorbei zu bewegen, größer als die Kraft, die notwendig ist, um den Rastbereich in Richtung der Längsachse an dem Träger vorbei zu bewegen, so ändert sich beim Anliegen einer entsprechend starken, den Träger vom Halteelement wegbewegenden Kraft die Relativlage des Rastbereichs zum Träger bevor der Befestiger seine Relativlage zum Halteelement ändert. Ist die Kraft, die notwendig ist, um das Rastelement in Richtung der Längsachse am Kontaktbereich vorbei zu bewegen, kleiner als die Kraft, die notwendig ist, um den Rastbereich in Richtung der Längsachse an dem Träger vorbei zu bewegen, so ändert sich beim Anliegen einer entsprechend starken, den Träger vom Halteelement wegbewegenden Kraft zuerst die Relativlage des Kontaktbereichs zum Rastelement, bevor sich die Relativlage des Rastbereichs zum Träger ändert.

Die Erfindung schafft einen Befestiger zum Sichern eines Halteelements an einem Träger. Der Befestiger ist halteklammerartig ausgestaltet und weist mindestens einen Schenkel und mindestens einen ersten Eingriffsabschnitt auf. Der Eingriffsabschnitt erstreckt sich nach außen von der Längsachse des Befestigers und ist zum Eingriff mit dem Halteelement ausgestaltet. Der mindestens eine Schenkel weist einen Rastabschnitt für ein Zurückhalten des Halteelements an einem Träger auf. Ferner weist der Befestiger einen Kanal zur Aufnahme eines Abschnitts des Halteelements auf, wobei der Befestiger mindestens einen Kontaktbereich für das Halteelement aufweist, der zumindest teilweise in dem Kanal positioniert ist. Der Kontaktbereich ist mit dem Eingriffsabschnitt mittels eines Verbindungsabschnitts verbunden. Zudem weist der Kontaktbereich einen Abschnitt mit einem Winkel größer als 0° und kleiner als 90° zur Längsachse des Kanals auf. Der Eingriffsabschnitt ist ausgestaltet, eine Relativbewegung des Befestigers zum Halteelement in Richtung der Längsachse des Befestigers zuzulassen, und ein weiterer sich nach außen erstreckender Eingriffsabschnitt ist als Fangelement für die Relativbewegung des Befestigers zum Halteelement vorgesehen, wobei sich der weitere Eingriffsabschnitt an den Kontaktbereich anschließt. Dadurch, dass der Befestiger einen weiteren Kontaktbereich für einen Abschnitt eines Halteelements aufweist, kann die Anzahl der Kontaktbereiche und/oder Eingriffsabschnitte des Befestigers im Hinblick auf das Halteelement erhöht werden. Die Kraft zum Sichern des Halteelements an dem Träger bzw. die Sicherung des Befestigers am Halteelement kann erhöht werden. Unterschiedliche Formen und Ausgestaltungen für den Kontaktbereich und/oder eine eventuelle Anpassung des Abschnitts des Halteelements, der mit dem Kontaktbereich in Kontakt gelangt, können flexibel vorgenommen werden. Dabei kann berücksichtigt werden, dass eine Demontage, insbesondere bei einer Wartung, vorgenommen werden kann, bei der die Maximalkraft zwischen dem Halteelement und dem Befestiger überwunden wird und der Befestiger vom Halteelement getrennt wird.

Im Rahmen der Beschreibung der vorliegenden Erfindung wird von einem Zurückhalten einerseits und von einem Sichern gesprochen. Das "Zurückhalten" wird so verstanden, dass das Haltelement derart mit dem Träger mittels des Befestigers verbunden bzw. an diesem befestigt ist, dass sich das Halteelement in einem normalen Betriebszustand nicht von dem Träger löst und im Wesentlichen nahe am Träger anliegen kann. Bei einem definierten Betriebszustand, beispielsweise das Auslösen einer Airbageinrichtung, die das Halteelement in Form eines Retainers aufweisen kann, oder wenn das Halteelement mit einer Krafteinwirkung oberhalb eines vorher festgelegten Kraftniveaus von dem Träger weggezogen wird, kann sich das Halteelement von dem Träger lösen und dann nur noch von dem Befestiger in einer zweiten Stufe an dem Träger gehalten werden. Dabei ist das Halteelement von dem Träger beabstandet. Das Lösen des Befestigers in Form einer Bewegung des Halteelements zum Träger in längsaxialer Richtung des Befestigers ist somit ein gewollter Betriebszustand des erfindungsgemäßen Befestigers. Demgegenüber wird mit einem "Sichern" eine feste Verbindung zwischen zwei Teilen, insbesondere dem Befestiger und dem Halteelement beschrieben, die in keinem Betriebszustand des Befestigers gelöst werden soll. Dies schließt allerdings nicht aus, dass auch eine solche Verbindung gelöst werden kann. Dies kann beispielsweise dann vorgesehen sein, wenn das Halteelement vollständig von dem Träger getrennt werden soll, beispielsweise in einem Wartungsfall. Die Art der Verbindung des Befestigers mit dem Träger und die Art der Verbindung des Befestigers mit dem Halteelement soll jedoch so gewählt sein, dass sie nach wie vor bestehen bleibt, während die Funktion des "Zurückhaltens" zwischen dem Halteelement und dem Träger gelöst wird. Man spricht insofern von einer zweistufigen Befestigung mittels des Befestigers.

Der Begriff "Zurückhalten" des Halteelements an einem Träger umfasst somit die Eignung des Befestigers, das mit dem Befestiger in Eingriff stehende Halteelement mit dem Träger zu verbinden und insbesondere die Eignung des Befestigers das Halteelement an dem Träger zurückzuhalten. Der Begriff "Zurückhalten" umfasst das Verhindern einer Bewegung des Halteelements in Bezug auf den Träger, an dem das Halteelement zurückgehalten werden soll, im Bereich des Befestigers, insbesondere eine Bewegung entlang einer Längsachse des Befestigers in beide Richtungen. Die Eignung zum "Zurückhalten des Halteelements" an dem Träger ergibt sich bei dem erfindungsgemäßen Befestiger durch den Rastabschnitt, wobei an einem Schenkel ein Rastabschnitt zur Anlage an einer Öffnung des Trägers vorgesehen ist und der Rastabschnitt für ein Zurückhalten des Halteelements am Träger dient bzw. derartig ausgestaltet ist. Ferner weist der Befestiger mindestens einen Eingriffsabschnitt auf, der mit dem Halteelement in Eingriff ist, insbesondere kann der Eingriffsabschnitt in eine Vertiefung im Halteelement eingreifen oder an einer Kontaktfläche des Halteelements, die nicht parallel zur Längsachse des Befestigers verläuft, anliegen. Die Vertiefung kann sich in Richtung quer zur Längsachse des Halteelements und/oder des Befestigers erstrecken.

Ist die Kraft, die notwendig ist, um einen mit dem Kontaktbereich zusammenwirkenden Bereich des im Kanal befindlichen Abschnitts des Halteelements in Richtung der Längsachse am Kontaktbereich vorbei zu bewegen und/oder den Teil des Halteelements, der mit dem Eingriffsabschnitt zusammen wirkt, vorbei zu bewegen, größer als die Kraft, die notwendig ist, um den Rastbereich in Richtung der Längsachse an dem Träger vorbei zu bewegen, so wird in einer ersten Stufe des Lösens der Befestigung, beispielsweise bei einer Kraft von ungefähr 200N, der Rastabschnitt des Befestigers am Träger gelöst, wobei der Eingriff des Eingriffsabschnitts am Befestiger erhalten bleibt. Das Haltelement kann sich in dieser ersten Stufe von dem Träger lösen und insbesondere in Richtung der Längsachse des Befestigers bewegen. In der ersten Stufe verbleibt das Halteelement am Befestiger gesichert. In einer zweiten Stufe, beispielsweise nach Aufbringen einer Kraft von ungefähr 270N kann der Eingriffsabschnitt des Befestigers außer Eingriff mit dem Halteelement gebracht werden, wobei sich auch der Abschnitt des Halteelements in dem Kanal in Richtung der Längsachse des Befestigers bewegt.

Der Begriff "Halteelement" im Sinne der Erfindung umfasst ein an einem Träger zu haltendes Bauteil oder Bauelement, beispielsweise einen Retainer eines Airbags.

Es kann zusätzlich oder alternativ vorgesehen sein, dass die Verbindung zwischen dem Befestiger und dem Halteelement derart ausgestaltet ist, dass ein Lösen der Verbindung zwischen Befestiger und Halteelement in Richtung der Längsachse des Befestigers nicht möglich ist, sondern der Befestiger in einer Richtung quer zur Längsachse bewegt werden muss. Der Befestiger kann das Halteelement dabei derart sichern, dass in Richtung der Längsachse des Befestigers ein Formschluss ein Lösen des Befestigers vom Halteelement verhindert. Ein Lösen kann dann durch ein Bewegen in einer anderen Bewegungsrichtung, insbesondere quer zur Richtung der Längsachse des Befestigers erfolgen.

Der Begriff "Träger" im Sinne der Erfindung umfasst beispielsweise ein Paneel oder eine Platte zur Befestigung an einer Fahrzeugkarosserie, insbesondere einem Karosserieblech. Der "Träger" kann auch Teil der Fahrzeugkarosserie bzw. des Karosserieblechs sein.

Der Begriff "halteklammerartig" im Sinne der Erfindung beschreibt eine Ausgestaltung eines Befestigers, insbesondere aus einem Metall, insbesondere bevorzugt aus einem Stahl, insbesondere ganz besonders bevorzugt eines Federstahls, mit einem mindestens einen Schenkel aufweisenden Körper, wobei der Begriff "halteklammerartig" insbesondere einen zweischenkligen Körper umfasst. Der Befestiger kann insbesondere symmetrisch bezüglich seiner Längsachse ausgebildet sein. Die Symmetrie kann insbesondere eine Achsensymmetrie bezüglich der Längsachse des Befestigers sein. Jeder der Schenkel bzw. die sich an die Schenkel erstreckenden weiteren Abschnitte kann bzw. können in unterschiedliche Abschnitte unterteilt werden, die wiederum ihrerseits in unterschiedliche Abschnitte unterteilt werden können. Die unterschiedlichen Abschnitte können mit unterschiedlichen Querschnitten bzw. Querschnittsgeometrien versehen sein.

Gemäß einer groben Einteilung kann der Befestiger in einen Fußabschnitt, in einen Halsabschnitt und einen Kopfabschnitt unterteilt werden, wobei die Abschnitte fließend ineinander übergehen können, so dass eine klare Trennung entlang einer Linie nicht zwingend vorhanden sein muss und in der Regel nicht vorhanden ist. Der Fußabschnitt ist im Wesentlichen zum Einführen des Befestigers in eine Öffnung des Trägers, die insbesondere als Langloch ausgestaltet sein kann, vorgesehen. Halsabschnitt und Kopfabschnitt des Befestigers können sich oberhalb des Trägers befinden, wobei insbesondere der Kopfabschnitt im Wesentlichen zum Ineingriffbringen mit dem Halteelement dient. Der Halsabschnitt weist im Wesentlichen Abschnitte des Befestigers auf, die sich im Wesentlichen in Richtung der Längsachse des Befestigers erstrecken.

Der Begriff "Eingriffsabschnitt" im Sinne der Erfindung umfasst einen Abschnitt des Befestigers, der zum Eingreifen in das Halteelement dient. Mittels dieses Eingriffsabschnitts wird der Befestiger am Halteelement befestigt und das Halteelement mittels des Befestigers am Träger gesichert. Das Halteelement kann insbesondere eine sich quer zur Längsachse des Befestigers und/oder des Halteelements erstreckende Vertiefung, in die der Eingriffsabschnitt eingreifen kann, aufweisen.

Der Begriff "Rastabschnitt" umfasst einen Abschnitt des Befestigers, mit dem das Halteelement an dem Träger zurückgehalten werden kann. Insbesondere bevorzugt wird der Befestiger mit dem Rastabschnitt in einer Öffnung des Trägers gehalten, indem der Rastabschnitt mit einer Wandung der Öffnung oder mit einer den Übergang zwischen einer Wandung der Öffnung und einer weiteren Oberfläche bildenden Kante des Trägers in Kontakt kommt. Dabei kann es vorgesehen sein, dass dieser Kontakt kraftschlüssig ist und insbesondere durch eine den Rastabschnitt in seiner Einbaulage in Richtung fort von der Längsachse drückenden Federkraft herbeigeführt wird. Mittels des Rastabschnittes kann der Befestiger aber auch formschlüssig durch eine in dem Träger gebildete Montageöffnung eingreifen. Es können auch in Längsrichtung des Befestigers beabstandete zueinander angeordnete Rastabschnitte vorgesehen sein, die den beiden Stufen des "Zurückhaltens" bzw. "Sicherns" des Halteelements zugeordnet sein können. Beispielsweise kann der dem Kopfabschnitt des Befestigers benachbarte Rastabschnitt als Rastrampe ausgestaltet sein, an dem sich eine Rückrampe zum Einstellen der Steifigkeit der Rastrampe bzw. zum Einstellen der Kraft, mit der der Befestiger von dem Träger gelöst werden kann, anschließen kann. Benachbart zur Basis des Befestigers kann ein weiterer als Fangabschnitt ausgeführter Rastabschnitt vorgesehen sein, der mindestens eine Rastnase aufweisen kann, wobei der Befestiger an dem Träger verliersicher mit diesem über den als Fangabschnitt ausgebildeten Rastabschnitt verbunden sein kann.

Der Begriff "Kanal", der durch den Befestiger ausgebildet ist, betrifft einen zumindest teilweise umfangsseitig angeordneten in Längsrichtung sich erstreckenden kanalartigen Bereich, in den ein Abschnitt des Halteelements bewegt werden kann.

Insbesondere kann der Kanal zwischen zwei einander zugewandten Abschnitten der Schenkel gebildet werden.

Der Begriff "Verbindungsabschnitt" umfasst einen Abschnitt des Befestigers, der zwischen zwei Abschnitten vorgesehen ist, um diese zu verbinden. Die Verbindung kann mittelbar oder unmittelbar erfolgen. Vorzugsweise ist ein Verbindungsabschnitt geradlinig bzw. flach ausgestaltet, d.h. ein Verbindungsabschnitt kann zumindest teilweise in einer Ebene liegen. Der Verbindungsabschnitt kann alternativ oder zusätzlich auch im Endbereich gekrümmte Abschnitte aufweisen, um an andere Abschnitte anzuschließen. Ein zwischen dem Eingriffsabschnitt und dem Umlenkabschnitt vorhandener Verbindungsabschnitt kann gegenüber der Längsachse des Befestigers einen Winkel von zwischen ungefähr 30° und ungefähr 60°, insbesondere bevorzugt einen Winkel von zwischen ungefähr 35° und ungefähr 55°, aufweisen.

Der Begriff "Kontaktbereich" umfasst einen Bereich des Körpers des Befestigers, der für einen Kontakt mit dem Halteelement ausgestaltet ist. Der Kontaktbereich weist mindestens einen Abschnitt des Befestigers auf, der zumindest teilweise im Wesentlichen gerade, insbesondere in einer Ebene, ist. Dabei umfasst der Begriff "gerade" auch mikroskopische und makroskopische Modulationen, die für die Funktion einer Anlage des Kontaktbereichs des Befestigers am Abschnitt des Halteelements unwesentlich sind.

Sofern beschrieben ist, dass der Kontaktbereich mit dem Eingriffsabschnitt mittels eines Verbindungsabschnitts verbunden ist, so wird hierunter insbesondere umfasst, dass sich der Kontaktbereich an dem Eingriffsabschnitt abstützt. Eine Bewegung des Kontaktbereichs kann zu einer Bewegung zumindest eines Abschnitts des Eingriffsabschnitts oder zu einem Einwirken auf den Eingriffsabschnitt führen. Beispielsweise kann eine Bewegung des Kontaktbereichs in Richtung fort von der Längsachse aufgrund der Verbindung durch den Verbindungsabschnitt dazu führen, dass der Eingriffsabschnitt in Richtung auf die Längsachse geschwenkt wird. Dies wird insbesondere bevorzugt dadurch erreicht, dass der Eingriffsabschnitt sowohl über den Verbindungsabschnitt mit dem Kontaktbereich, als auch mit einem nicht mit dem Kontaktbereich oder dem Verbindungsabschnitt verbundenen Abschnitt des Schenkels verbunden ist. Dies kann dazu führen, dass die Verbindung des Eingriffsabschnitts mit dem weiteren Abschnitt des Schenkels eine Schwenkachse bildet, um die der Kontaktbereich von der Längsachse fort und der Eingriffsabschnitt im Gegenzug auf die Längsachse hin geschwenkt werden kann. Bei einer derartigen Anordnung wird die Kraft, die notwendig ist, um einen mit dem Kontaktbereich zusammenwirkenden Teil, beispielsweise ein Rastelement, des in dem Kanal befindlichen Abschnitts des Halteelements relativ zu dem Kontaktbereich in Längsrichtung zu bewegen, und/oder die notwendig ist, um den Eingriffsabschnitt an dem Teil des Haltelements vorbei zu bewegen, mit dem er zusammenwirkt, insbesondere durch die Lage des Eingriffsabschnitts relativ zum Kontaktbereich, durch die Winkellage des Eingriffsabschnitts relativ zur Längsachse, durch die Winkellage des Kontaktbereichs relativ zur Längsachse, durch die Materialwahl, Form und Ausrichtung des Verbindungsabschnitts und durch die Art der Verbindung des Eingriffsabschnitts mit dem weiteren Bereich des Schenkels bestimmt. Sie alle haben Einfluss darauf, welche Kraft notwendig ist, um den Kontaktbereich von der Längsachse fort und den Eingriffsabschnitt auf die Längsachse zu zu schwenken.

Der mit dem Kontaktbereich benannte Abschnitt, der in einem Winkel größer als 0° und kleiner als 90° zur Längsachse des Kanals bzw. zur Längsachse des Befestigers verläuft, ist derartig gewählt, dass ein Sichern funktionell möglich ist, und zudem beim Aufbringen einer vorbestimmten Zugkraft auch ein Lösen dieses Eingriffs erfolgen kann.

Der Begriff "Befestiger" umfasst insbesondere eine Vorrichtung, die mit dem Halteelement und/oder dem Träger geclipst bzw. gesteckt werden kann, um eine lösbare Verbindung zwischen den beiden mit dem Befestiger herzustellen.

Der Begriff "zugewandt" im Sinne der Erfindung in Bezug auf zwei Flächen bzw. Abschnitte zweier Flächen umfasst, dass die Flächennormalen der betrachteten Flächen oder Abschnitte der Flächen einen Winkel von < 45° miteinander einschließen. Insbesondere können die Flächennormalen der betrachteten Flächen einen Winkel von deutlich < 45°, nämlich im Wesentlichen 10 bis 0° miteinander einschließen.

Der Begriff "in Richtung" in Bezug auf eine Bewegung umfasst im Sinne der Erfindung eine Bewegung, die eine Richtungskomponente aufweist, die zur Richtung parallel ist, nicht notwendigerweise wird unter dem Begriff "in Richtung" nur eine translatorische Bewegung in dieser einen Richtung verstanden.

Sofern der Begriff "ein" und entsprechende grammatikalische Anpassungen an das Genus des dem Begriff nachfolgenden bezeichnenden Elements in der Beschreibung und den Ansprüchen verwendet wird, so umfasst dieser Begriff die Einzahl und die Mehrzahl des bezeichnenden Elements. Der Begriff "ein" und entsprechend grammatikalische Anpassungen an das dem Begriff nachfolgenden bezeichneten Elements schließt in der Regel das Vorsehen weiterer der Elemente nicht aus. Ein verwendetes Zahlwort (2, 3, 4 usw.) umfasst die Möglichkeit, dass mehr als durch das verwendete Zahlwort bezeichnete Elemente vorhanden sein können.

Der Begriff "Symmetrie" bzw. "symmetrisch" im Sinne der Erfindung kann eine Symmetrie bzgl. einer oder mehrerer Achsen oder eine Symmetrie bzgl. eines Punktes oder bzgl. einer Ebene umfassen, wobei geringfügige Abweichungen von der rein geometrischen Symmetrie umfasst sein sollen, die keine wesentliche Beeinträchtigung der Funktion bewirken.

Zahlen und Zahlenangaben im Sinne der Erfindung, denen insbesondere der Begriff "ungefähr" vorgestellt ist, können neben der konkret angegebenen Zahl auch eine bis zu 10%-ige Abweichung oder insbesondere einen Winkelbereich von + / - 10° um den konkret angegebenen Zahlenwert umfassen.

Der Begriff "aufweisen" sowie der Begriff "umfassen" umfassen auch neben der reinen eigentlichen Bedeutung dieser Begriffe auch den Begriff "bestehen aus".

In einer bevorzugten Ausführungsform schließt der Eingriffsabschnitt mit der Längsachse des Befestigers einen Winkel von kleiner oder gleich 90° ein, was zu einem erleichterten Eingreifen des Eingriffsabschnitts in ein entsprechendes Element des Halteelements führt. Der Winkel kann bevorzugt zwischen ungefähr 65° und 85° liegen. Sofern eine Federkraft zwischen zwei Schenkeln vorliegt, an denen jeweils ein Eingriffsabschnitt vorhanden ist, so ist eine Verbindung neben dem vorhandenen Formschluss auch über die zwischen den Schenkeln vorliegende Vorspannung in Form eines Kraftschlusses vorhanden.

In einer bevorzugten Ausführungsform weist der Kontaktbereich einen Umlenkabschnitt auf oder schließt sich an den Umlenkabschnitt an, wobei der Umlenkabschnitt im Bereich des Kanals angeordnet ist. Die alternative Beschreibung, dass der Umlenkabschnitt Teil des Kontaktbereichs sein kann oder sich an diesen anschließt, ist gewählt worden, da der Umlenkabschnitt nur teilweise oder gar nicht Teil des Kontaktbereichs sein muss. Im montierten Zustand kann vorgesehen sein, dass der Umlenkabschnitt den Abschnitt des Halteelements kontaktiert oder nicht. Mittels des Umlenkabschnitts kann ein Abschnitt bzw. ein Bereich des Befestigers vorgesehen sein, der nicht nur in den Kanal ragt, sondern auch in Richtung von dem Kanal weg angeordnet sein kann. An einen derartigen Bereich oder Abschnitt kann sich beispielsweise ein im Nachfolgenden beschriebener weiterer Eingriffsabschnitt für das Halteelement anschließen oder an dem Abschnitt ausgebildet sein. Mit dem Umlenkabschnitt kann auch eine Vergrößerung des Kontaktbereichs erzielt werden, in dem nicht nur ein Abschnitt vorgesehen ist, der den Abschnitt des Halteelements durch ein Hereinragen in den Kanal kontaktieren kann, sondern auch in einem Bereich, der vom Kanal weg gerichtet ist.

Der Begriff "Umlenkabschnitt" umfasst einen Abschnitt, bei dem das Material eine zumindest teilweise Richtungsumkehr erfährt. Üblicherweise wird eine Umlenkung von größer als 60°, bevorzugt größer als 70°, ganz besonders bevorzugt größer als 80°, insbesondere im Wesentlichen im Bereich von 90° erreicht. Der Umlenkabschnitt umfasst einen Abschnitt, der im Bereich des Kanals angeordnet ist und von dem sich Material in zwei Richtungen weg erstreckt. Der Umlenkabschnitt kann einen Bereich umfassen, der als Symmetrieabschnitt gilt, d. h. einen Bereich, zu dem beispielsweise Abschnitte, insbesondere Verbindungsabschnitte, symmetrisch angeordnet sein können. Insbesondere in Bezug auf eine Querschnittsansicht kann der Umlenkabschnitt einen Bereich aufweisen, gegenüber dem das im Umlenkabschnitt umgelenkte Material symmetrisch, d. h. insbesondere punktsymmetrisch ausgestaltet sein kann. Der Umlenkabschnitt kann insbesondere ein Abschnitt sein, der sich am weitesten zur Mittelachse in den Kanal hinein erstreckt bzw. in diesem angeordnet ist.

In einer bevorzugten Ausführungsform kann der Kontaktbereich mit dem Verbindungsabschnitt und dem Umlenkabschnitt in Richtung der Längsachse des Befestigers einen Teil eines V-förmigen, U-förmigen, rautenförmigen, teilkreisförmigen oder teilelliptischen Abschnitts formen. Eine derartige Ausgestaltung ist bevorzugt, da ein Einführen des Abschnitts des Halteelements in den Kanal aufgrund dieser Geometrie erleichtert werden kann und die Fläche für den Kontaktbereich zur Ausbildung einer Sicherungskraft erhöht sein kann. Ferner kann mit der gewählten Geometrie auch eine Steifigkeit in diesem Bereich des Befestigers eingestellt werden. Es kann eine symmetrische Ausgestaltung von Verbindungsabschnitt, Umlenkabschnitt und einem sich an den Umlenkabschnitt anschließenden weiteren Abschnitt, insbesondere einem weiteren Verbindungsabschnitt, der von dem Umlenkabschnitt vom Kanal weg gerichtet ist, bevorzugt sein. Unbeachtlich bei der genannten bevorzugten Symmetrie ist, dass sich an den Verbindungsabschnitt im weiteren Verlauf der Eingriffsabschnitt und an den dem Umlenkabschnitt folgenden Abschnitt, dem weiteren Verbindungsabschnitt, der weitere Eingriffsabschnitt anschließen kann. Zwischen dem an den Verbindungsabschnitt anschließenden Eingriffsabschnitt und dem an den weiteren Verbindungsabschnitt anschließenden Abschnitten, insbesondere in Form des Eingriffsabschnitts und des weiteren Eingriffsabschnitts muss keine Symmetrie vorliegen. Die Symmetrie kann auf den Verbindungsabschnitt, den Umlenkabschnitt und den an den Umlenkabschnitt anschließenden Verbindungsabschnitt beschränkt sein.

Der sich nach außen erstreckende weitere Eingriffsabschnitt für das Halteelement schließt sich an den Kontaktbereich im weiteren Verlauf, insbesondere an einen Bereich der sich vom Kanal weg erstreckt, an. Der weitere Eingriffsabschnitt für das Halteelement ist derart ausgestaltet, dass der weitere Eingriffsabschnitt für einen Formschluss mit dem Halteelement in Längsrichtung des Befestigers ausgestaltet ist.

Damit kann verhindert werden, dass eine Bewegung des Halteelements relativ zum Befestiger in Richtung der Längsachse des Befestigers über eine Relativlage, bei der das Fangelement an einer Fläche des Halteelements anliegt, hinaus, ausgeführt werden kann. Beispielsweise kann der weitere Eingriffsabschnitt in Anlage zu einer Innenwandung des Haltelements gebracht werden. Der weitere Eingriffsabschnitt kann damit ein Lösen des Befestigers vom Halteelement bezüglich einer in Längsrichtung des Befestigers aufgebrachten Kraft im Wesentlichen verhindern. Ein Lösen des Befestigers vom Halteelement kann jedoch dadurch erreichbar sein, dass der weitere Eingriffsabschnitt (das Fangelement) quer zur Längsachse des Befestiger bewegt werden kann und der Befestiger durch eine Queröffnung am Haltelement aus dem Halteelement geführt werden kann. In einer besonders bevorzugten Ausführungsform weist der weitere Eingriffsabschnitt mindestens einen Abschnitt auf, der sich im Wesentlichen quer zur Längsachse des Befestigers erstreckt. Zwischen dem weiteren Eingriffsabschnitt und der Längsachse des Befestigers kann ein Winkel von größer 45°, bevorzugt ungefähr 90° vorliegen. Durch die Ausgestaltung des weiteren Eingriffsabschnitts quer zur Längsachse des Befestigers kann die Fläche, die zur Anlage mit einer Wandung des Halteelements gelangt, vergrößert und damit die Stabilität bzw. die Sicherungseigenschaft vergrößert werden.

Der Begriff "weiterer Eingriffsabschnitt" umfasst einen mit dem Eingriffsabschnitt mittels zweier Verbindungsabschnitte und eines Umlenkabschnitts verbundenen weiteren Abschnitt. Eine zum Umlenkabschnitt vorhandene Symmetrie der Verbindungsabschnitte kann genutzt werden, dass die weiteren Eingriffsabschnitte sich im Wesentlichen in gleicher Richtung erstrecken wie die Eingriffsabschnitte, so dass eine Kraftbeaufschlagung zum Trennen insbesondere zu einem Spreizen der weiteren Eingriffsabschnitte führt, um die Sicherungsfunktion auszuführen.

In einer bevorzugten Ausführungsform ist der weitere Eingriffsabschnitt mit dem Kontaktbereichs mittels eines sich durch ein Fenster eines Schenkels des Befestigers erstreckenden weiteren Verbindungsabschnitts verbunden, wodurch eine kompakte Ausgestaltung des Befestigers erreicht werden kann. Die Grundfläche des Körpers des Befestigers quer zur Längsachse des Befestigers ist trotz der erreichten erhöhten Funktionalität gering, wobei die Ausbildung eines Fensters in einem Schenkel des Befestigers keine die Stabilität des Befestigers beeinträchtigende Wirkung hat.

In einer bevorzugten Ausführungsform ist das Fenster in einem zur Längsachse des Befestigers einen Winkel ungleich 0° aufweisenden Abschnitts eines Schenkels ausgebildet, wodurch in einfacher Weise eine Vergrößerung des Kanals am Kopfabschnitt erzeugt werden kann, wobei der Abschnitt derart ausgerichtet ist, dass der Abstand des Schenkels zur Längsachse in Richtung von der Basis der Halteklammer sich vergrößert. Mit anderen Worten nimmt der Abstand des Abschnitts in Richtung vom Halsabschnitt zum Kopfabschnitt zu. Die Ausgestaltung des Abschnitts ermöglicht, die zuvor beschriebene symmetrische Ausgestaltung zwischen Verbindungsabschnitt, Umlenkabschnitt und auf den Umlenkabschnitt folgenden Abschnitt. In einer besonders bevorzugten Ausführungsform kann der Winkel im Bereich von ungefähr 5° bis ungefähr 25°, insbesondere bevorzugt im Bereich von ungefähr 10° bis ungefähr 20° liegen.

Die Anlageflächen bzw. Kontaktflächen für ein Rastelement des Haltelements können in einer Querschnittsansicht mit anderen Abschnitten eine komplexe Struktur bilden, die in mehreren Richtungen jeweils eine Kontaktfläche aufweist. Beispielsweise ist in Querschnittsrichtung eine rautenförmige, V-förmige, U-förmige, teilkreisförmige oder teilelliptische Ausgestaltung möglich. Eine derartige Struktur ermöglicht die Kontaktflächen in mehreren einander gegenüberliegenden Richtungen anzuordnen.

In einer bevorzugten Ausführungsform ist die räumliche Erstreckung des Eingriffsabschnitts von einer Mittelachse des Befestigers größer als die räumliche Erstreckung des weiteren Eingriffsabschnitts von der Mittelachse des Befestigers. Hierdurch kann eine Verjüngung des Befestigers in Richtung vom Kopfabschnitt zum Fußabschnitt des Befestigers erreicht werden, die dennoch zu keiner Beeinträchtigung der Funktionalität führt und die Handhabung des Befestigers vereinfacht.

In einer bevorzugten Ausführungsform weist der Befestiger eine sich in den Kanal erstreckende Vertiefung oder Sicke oder Rastnase auf, wodurch eine Stabilität des Befestigers, insbesondere im Halsabschnitt, erreicht werden kann. Die Rastnase kann dabei dazu vorgesehen sein, in den im Kanal befindlichen Abschnitt des Halteelements einzugreifen. Die Vertiefung bzw. Sicke, bzw. Rastnase kann insbesondere im endseitigen Bereich des Halsabschnitts zum Fußabschnitt hin angeordnet sein. Die Vertiefung bzw. Sicke, bzw. Rastnase ist rinnenartig in Richtung der Längsachse des Befestigers ausgebildet, wobei in Richtung des Kopfabschnitts die Rinne endseitig punktiert bzw. offen ausgestaltet sein kann. Der endseitige Bereich der Vertiefung bzw. der Sicke, bzw. der Rastnase, die dem Kopfabschnitt zugewandt ist, kann als Anschlag für den in den Kanal eingeführten Abschnitt des Halteelements dienen, insbesondere wenn in dem in den Kanal eingeführten Abschnitt eine Ausnehmung zum Zusammenwirken mit der Vertiefung, bzw. Sicke, bzw. Rastnase vorgesehen ist.

Die Erfindung schafft auch ein System, das einen zuvor beschriebenen Befestiger und ein Halteelement umfasst. Dabei ist der Abstand zwischen dem Eingriffsabschnitt und dem Kontaktbereich in Längsrichtung des Befestigers an einen Abstand des Halteelements zwischen einer Kontaktfläche des Halteelements, an der der Eingriffsabschnitt anliegen kann, und einem an einem von dem Kanal aufzunehmenden Abschnitt des Halteelements vorgesehenen Rastelement angepasst ist, an welchem der Kontaktbereich anliegt. Eine derartige Anpassung führt dazu, dass ein auf dem Träger angeordnetes mittels des Befestigers befestigtes Halteelement nahe zum Träger angeordnet werden kann. Ein Abstand zwischen dem Träger und dem dem Träger zugewandten Ende des Halteelements kann minimiert und/oder eingestellt werden.

In einer bevorzugten Ausführungsform kann das System derart angepasst sein, dass der im Kanal vorliegende Abschnitt des Halteelements derart an die geometrische Ausgestaltung des Befestigers angepasst ist, dass sowohl eine Anlage des Abschnitts an dem Kontaktbereich des Befestigers und einem den Kontaktbereich zugewandten Bereich eines Schenkels ermöglicht ist, insbesondere kann der Bereich des Schenkels in einem Abschnitt vorgesehen sein, in dem das Fenster für den Durchtritt des weiteren Verbindungsabschnitts ausgestaltet ist. Mit einem derart ausgestalteten Abschnitt des Halteelements kann sowohl eine Anlage in im Wesentlichen zwei entgegengesetzten Richtungen erreicht werden. Beispielsweise kann der Abschnitt des Halteelements mit einer Anlage eine Spreizung des Schenkels bewirken und mit der Anlage an dem Kontaktbereich eine Vergrößerung der Kraft in entgegengesetzter Richtung zum Sichern des Befestigers am Halteelement. Die Ausgestaltung des Abschnitts des Halteelements kann somit als sich ergänzende Einwirkung auf den Befestiger ausgestaltet sein. Insbesondere kann der dem Kontaktbereich zugewandte Bereich des Schenkels der Abschnitt des Befestigers sein, in dem das Fenster für den weiteren Verbindungsabschnitt ausgestaltet ist und/oder in dessen mittelbarem bzw. unmittelbarem Verlauf sich der Eingriffsabschnitt anschließt.

In einer bevorzugten Ausführungsform weist der Abschnitt des Halteelements einen Bereich auf, mit dem der Schenkel des Befestigers in einer Lage zur Längsachse des Befestigers stabilisiert wird. Der Abschnitt des Halteelements ist damit in einem Bereich beabstandet zur Kontaktierung des Befestigers im Bereich des Kontaktbereichs des Befestigers derart ausgestaltet, den Befestiger in einer Stellung vorzuspannen bzw. auseinander zu drücken, die einer gespreizten Stellung des Schenkels bzw. der Schenkel entspricht. Dazu kann der Abschnitt des Halteelements einen Steg aufweisen, der sich insbesondere in dem Halsabschnitt des Befestigers erstrecken kann.

In einer bevorzugten Ausführungsform kann das Halteelement Nasen aufweisen, die zur Auflage auf den Träger ausgebildet sind, um den Kontaktbereich zwischen dem Halteelement und dem Träger zu minimieren und/oder eine stabile Anlage zu ermöglichen.

In einer bevorzugten Ausführungsform ist ein Rastabschnitt vorgesehen, der durch eine im Winkel zur Längsachse verlaufende Rastrampe gebildet wird, die sich im Vergleich zum Eingriffsabschnitt auf der anderen Seite des Kontaktbereichs befindet und eine Oberfläche aufweist, die der in Kontakt mit der Kontaktfläche des Halteelements kommenden Oberfläche des Eingriffsabschnitt zugewandt ist.

In einer bevorzugten Ausführungsform ist ein weiterer Rastabschnitt in Form eines Fangabschnitts vorgesehen, der eine Oberfläche aufweist, die der in Kontakt mit der Kontaktfläche des Halteelements kommenden Oberfläche des Eingriffsabschnitts zugewandt ist, wobei der Fangabschnitt in Vergleich zum Rastabschnitt weiter entfernt entlang der Längsachse vom Eingriffsabschnitt angeordnet ist.

Der erfindungsgemäße Befestiger bzw. das erfindungsgemäße System finden insbesondere bei der Befestigung von Retainern für Airbags Verwendung.

Nachfolgend wird die Erfindung anhand von in den Zeichnungen dargestellten Ausführungsbeispielen der Erfindung beschrieben.

Darin zeigen:
- Fig. 1: eine Seitenansicht eines Befestigers;
- Fig. 2: eine weitere Seitenansicht des Befestigers gemäß Fig. 1 in einer Ansicht um 90° gedreht;
- Fig. 3: eine isometrische Darstellung des Befestigers gemäß Fig. 1 und 2;
- Fig. 4: eine teilweise Schnittdarstellung eines Befestigers gemäß Fig. 1 bis 3 mit einem Halteelement und einem Träger in einem ersten Betriebszustand;
- Fig. 5: den Befestiger, den Träger und das Halteelement gemäß Fig. 4 in einem weiteren Betriebszustand;
- Fig. 6: den Befestiger, den Träger und das Halteelement gemäß Fig. 4 in isometrischer Darstellung;
- Fig. 7: den Befestiger, den Träger und das Halteelement gemäß einer weiteren Ausführungsform in einem ersten Betriebszustand; und
- Fig. 8: den Befestiger, den Träger und das Halteelement gemäß Fig. 7 in einem weiteren Betriebszustand.

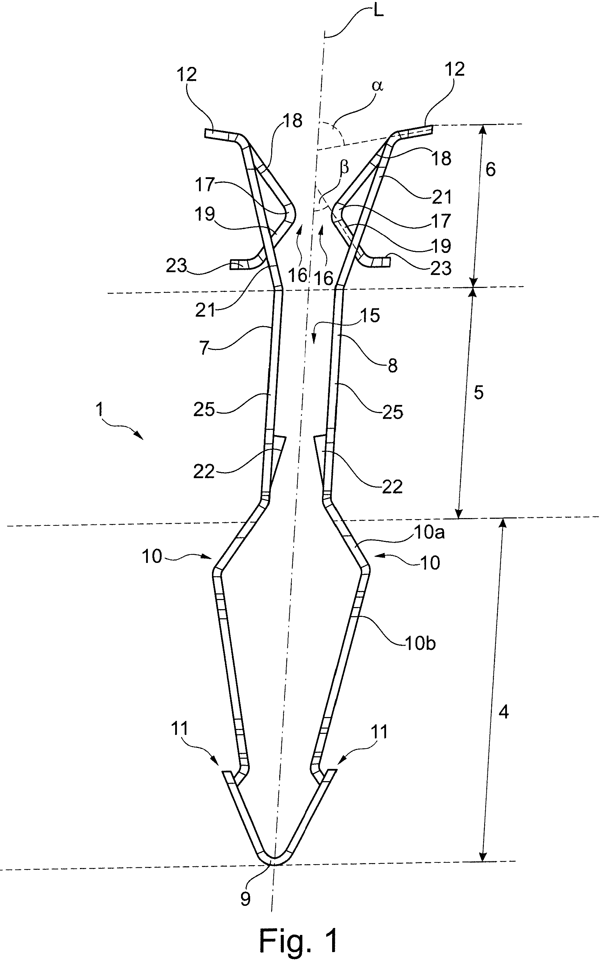

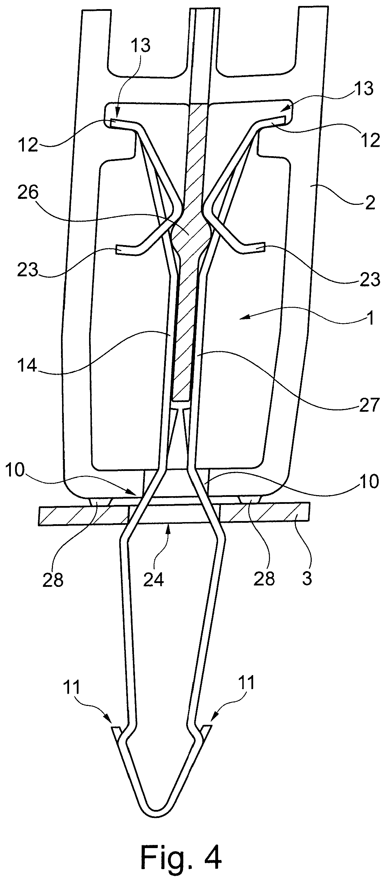

Fig. 1 zeigt in einer Seitenansicht einen Befestiger 1 zum Sichern eines Halteelements 2 an einem Träger 3 (s. Fig. 4 bis 6). Der Befestiger 1 umfasst einen Fußabschnitt 4, einen Halsabschnitt 5 und einen Kopfabschnitt 6, wobei die in Fig. 1 gezeigte klare geradlinig verlaufende Trennung nur schematisch angegeben ist. Die Abschnitte gehen fließend ineinander über.

Der Befestiger 1 ist halteklammerartig ausgestaltet und weist zwei Schenkel 7, 8 auf, die mittels einer Basis 9 miteinander verbunden sind.

Im Bereich des Fußabschnitts 4 sind ein Rastabschnitt 10 und ein Fangabschnitt 11 für jeden der beiden Schenkel 7, 8 vorgesehen. Der Rastabschnitt 10 und der Fangabschnitt 11 sind hinsichtlich der Längsachse L des Befestigers 1 beabstandet zueinander angeordnet. Der Rastabschnitt 10 weist eine Rastrampe 10a und eine Rückrampe 10b auf, mit denen der Befestiger 1 in einer als Langloch ausgestalteten Öffnung 24 verrastet werden kann. Der Rastabschnitt 10 ist für ein Zurückhalten des Halteelements 2 am Träger 3 vorgesehen, wie es in der Fig. 4 für einen ersten Betriebszustand gezeigt ist. In dem ersten Betriebszustand ist der Befestiger 1 mit der Rastrampe 10a der Schenkel 7, 8 am Träger 3 verrastet.

Zum Befestigen des Halteelements 2 weist der Befestiger 1 für jeden der Schenkel 7, 8 einen Eingriffsabschnitt 12 auf, der sich in einem Winkel α von ca. 85° zur Längsachse L nach außen von der Längsachse L des Befestigers 1 erstreckt und zum Eingriff mit dem Halteelement 2 ausgestaltet ist. Das Halteelement 2 weist hierfür Vertiefungen 13 auf, in die der Eingriffsabschnitt 12 des Befestigers 1 durch Anlage an eine, einen Teil der Vertiefung bildenden Kontaktfläche im ersten Betriebszustand, wie es in Fig. 4 zu sehen ist, eingreifen kann.

Das Halteelement 2 weist einen Abschnitt 14 auf, der an einen Kanal 15 im Befestiger 1 angepasst ist. Der Kanal 15 im Befestiger 1 ist von den Schenkeln 7, 8 zumindest teilweise begrenzt. Als Teil des Befestigers 1 ist in dem Kanal 15 jeweils ein Kontaktbereich 16 vorgesehen. Der Kontaktbereich 16 verläuft in einem Winkel β von ca. 45° zur Längsachse (L) des Befestiger. Kontaktbereich 16 kann in Anlage mit einem Bereich des Abschnitts 14 des Halteelements 2 gelangen, um das Halteelement 2 zu sichern. Der Kontaktbereich 16 des Befestigers 1 wirkt gegen eine Bewegung des Halteelements 2 in Richtung der Längsachse L des Befestigers 1 vom Träger 3 weg.

Im Kontaktbereich 16 des Befestigers 1 ist ein Umlenkabschnitt 17 vorgesehen, der in den Kanal 15 hineinragt. Der Umlenkabschnitt 17 ist mittels eines Verbindungsabschnitts 18 mit dem Eingriffsabschnitt 12 verbunden. An den Umlenkabschnitt 17 schließt in Richtung des Fußabschnitts 4 des Befestigers 1 ein weiterer Verbindungsabschnitt 19 an, der Teil des Kontaktbereichs 16 für den Abschnitt 14 des Halteelements 2 ist. Der weitere Verbindungsabschnitt 19 ist auf den Verbindungsabschnitt 18 zurückgebogen. Der Verbindungsabschnitt 19 erstreckt sich durch ein in den Schenkeln 7, 8 ausgebildetes Verbindungsfenster 20 des Befestigers 1. Der Verbindungsabschnitt 18, der Umlenkabschnitt 17 und der weitere Verbindungsabschnitt 19 bilden einen Teil einer rautenförmigen Struktur, wie es in der Fig. 1 in der Seitenansicht zu sehen ist.

Das Fenster 20 ist in einem Abschnitt 21 der Schenkel 7, 8 ausgebildet, der einen Winkel ungleich 0° gegenüber der Längsachse L des Befestigers 1 aufweist.

In dem Halsabschnitt 5 des Befestigers 1, der im Wesentlichen geradlinige, einen kleinen Winkel nahe 0° zur Längsachse L des Befestigers 1 einschließende Abschnitte 25 aufweist, ist zur Verstärkung der Abschnitte 25 und als Anschlag für den Abschnitt 14 des Halteelements 2 in Richtung auf den Träger 3 zu jeweils eine rinnenförmige Vertiefung 22 ausgebildet, die in den Kanal 15 hineinragt.

Die Fig. 4 zeigt, dass der Abschnitt 14 des Halteelements 2 an den Befestiger 1 angepasst ist. Der Abstand zwischen dem Eingriffsabschnitt 12 und dem Kontaktbereich 16 in Längsrichtung des Befestigers 1 ist an einen Abstand des Halteelements 2 zwischen der Vertiefung 13, die an dem proximalen Ende des Halteelements 2 positioniert ist, und einem Rastelement 26 zur Anlage an dem Kontaktbereich 16, welches im Wesentlichen entlang der Mittellinie des Halteelements 2 positioniert ist, angepasst. Das Rastelement 26 des Halteelements 2 ist an die geometrische Form des Befestigers 1 angepasst, indem der für die Anlage an den Kontaktbereich 16 vorgesehene Bereich diese Form im Wesentlichen nachbildet. Eine an dem Rastelement ausgebildete Fläche, die dem Träger 3 zugewandt ist, bildet im Wesentlichen die Form des Abschnitts 21 nach, die mit der entsprechenden Fläche des Rastelements in Kontakt gelangt.

An das Rastelement 26 des Halteelements 2 schließt sich im Abschnitt 14 des Halteelements 2 ein Steg 27 an, der die beiden Schenkel 7, 8 im Halsabschnitt 5 des Befestigers 1 auseinanderdrückt.

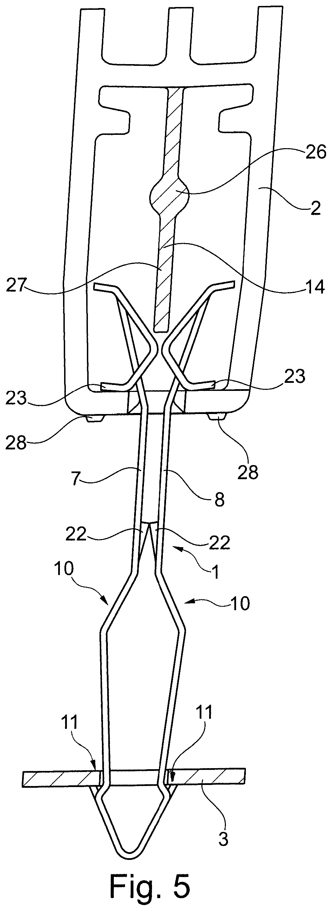

Die Fig. 5 zeigt den weiteren Betriebszustand, der beispielsweise nach Auslösen eines Airbags vorliegt, sofern das Halteelement 2 als Retainer eines Airbagsystems ausgestaltet ist. Das Halteelement 2 ist am Träger 3 gesichert, wobei eine Bewegung des Halteelements 2 bezüglich des Trägers 3 erfolgt ist. Der Befestiger 1 ist sowohl gegenüber dem Träger 3 bewegt als auch das Halteelement 2 gegenüber dem Befestiger 1. Insbesondere ist der Abschnitt 14 des Halteelements 2 außer Eingriff mit dem Kontaktbereich 16 des Befestigers 1 gelangt. Das Halteelement 2 ist gegenüber dem Träger 3 in längsaxialer Richtung des Befestigers 1 gesichert, da ein Formschluss des Befestigers 1 in dieser Richtung vorliegt. Der Befestiger 1 ist verliersicher mittels des Rastabschnitts 11 in der Öffnung 24 des Trägers 3 gehalten.

Nasen 28, die für eine Anlage am Träger 3 an einer Außenwandung des Halteelements 2 ausgestaltet sind, sind exponiert.

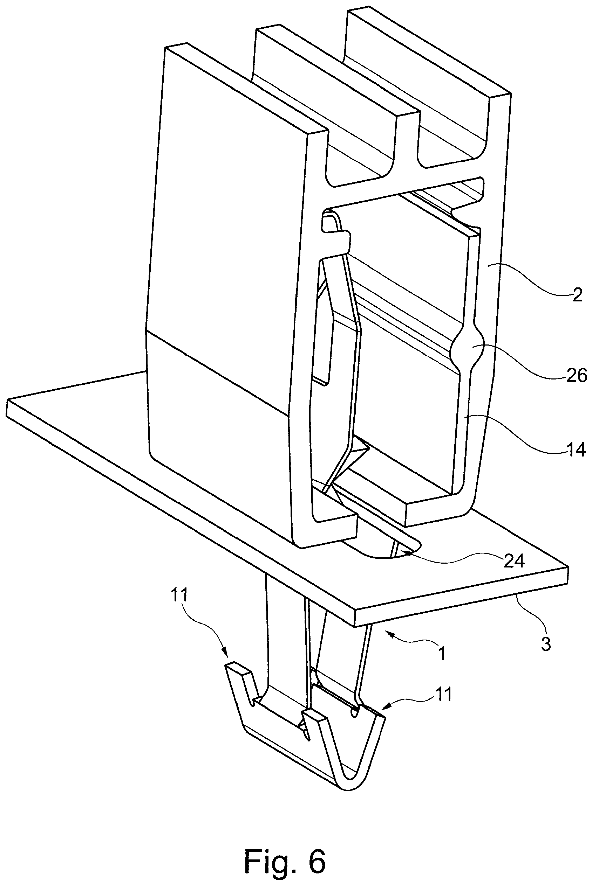

Die Fig. 6 zeigt den ersten Betriebszustand gemäß Fig. 4 in einer isometrischen Darstellung.

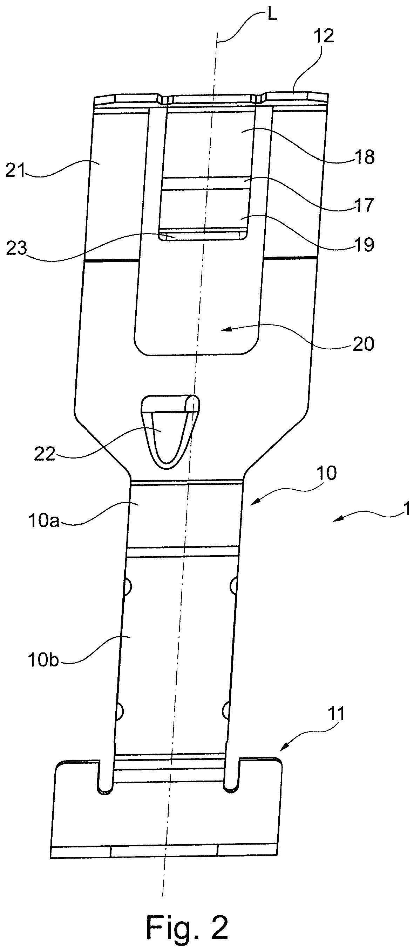

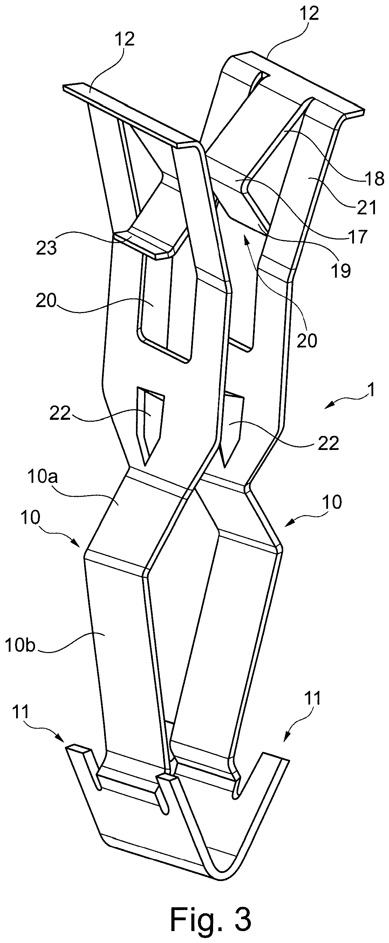

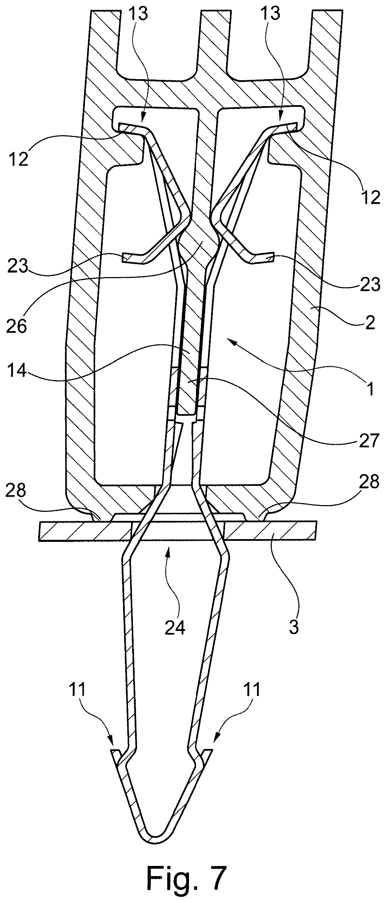

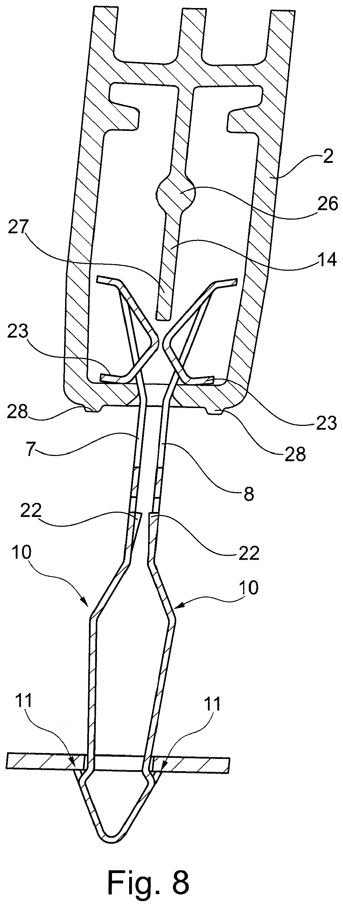

Fig. 7 zeigt den einen Befestiger 1, einen Träger 3 und eine Halteelement 2 gemäß einer weiteren Ausführungsform in einem ersten Betriebszustand. Der Unterschied zwischen dem Halteelement 2 der Ausführungsform gemäß Fig. 1 bis 6 besteht im Wesentlichen darin, dass das Rastelement 26 im Querschnitt rund ausgestellt ist und im Wesentlichen einer Ellipsen- bzw. Kugelform angenähert ist. Das Halteelement 2 gemäß Fig. 7 und 8 ist mit dem Befestiger 1 gemäß Fig. 1 bis 6 verwendbar bzw. kombinierbar.

Der Unterschied zwischen dem Befestiger 1 gemäß Fig. 7 und 8 zu dem Befestiger 1 gemäß Fig. 1 bis 6 besteht im Wesentlichen darin, dass die Vertiefung 22 am Schenkel 8 ausgebildet ist. Während die Vertiefung 22 am Schenkel 7 weit in den Kanal 15 ragt, ist die Vertiefung 22 am Schenkel 8 wenig weit in den Kanal 15 hineinragend.

## Patentansprüche

1. Befestiger (1) zum Sichern eines Halteelements (2) an einem Träger (3), wobei
der Befestiger (1) halteklammerartig ausgestaltet ist und mindestens einen Schenkel (7, 8) und mindestens einen ersten Eingriffsabschnitt (12) aufweist, wobei sich der Eingriffsabschnitt (12) nach außen von der Längsachse (L) des Befestigers (1) erstreckt und zum Eingriff mit dem Halteelement (2) ausgestaltet ist, und
der Schenkel (7, 8) mindestens einen Rastabschnitt (10) für ein Zurückhalten des Halteelements (2) an einem Träger (3) aufweist, wobei
der Befestiger (1) einen Kanal (15) zur Aufnahme eines Abschnitts (14) des Halteelements (2) aufweist, wobei
der Befestiger (1) mindestens einen Kontaktbereich (16) für einen Kontakt mit dem Halteelement (2) aufweist, der zumindest teilweise in dem Kanal (15) positioniert ist, und
der Kontaktbereich (16) mit dem Eingriffsabschnitt (12) mittels eines Verbindungsabschnitts (18) verbunden ist, wobei
der Kontaktbereich (16) in einem Winkel größer als 0° und kleiner als 90° zur Längsachse des Kanals (15) verläuft,
**dadurch gekennzeichnet, dass**
der Eingriffsabschnitt (12) ausgestaltet ist, eine Relativbewegung des Befestigers (1) zum Halteelement (2) in Richtung der Längsachse (L) des Befestigers (1) zuzulassen, und ein weiterer sich nach außen erstreckender Eingriffsabschnitt (23) als Fangelement für die Relativbewegung des Befestigers (1) zum Halteelement (2) vorgesehen ist, wobei sich der weitere Eingriffsabschnitt (23) an den Kontaktbereich (16) anschließt.

2. Befestiger nach Anspruch 1, **dadurch gekennzeichnet, dass** der Eingriffsabschnitt (12) mit der Längsachse (L) des Befestigers (1) einen Winkel von kleiner oder gleich 90° einschließt.

3. Befestiger nach Anspruch 1 oder 2, **dadurch gekennzeichnet, dass**
der Kontaktbereich (16) einen Umlenkabschnitt (17) aufweist oder sich ein Umlenkabschnitt (17) an den Kontaktbereich (16) anschließt, wobei der Umlenkabschnitt (17) im Bereich des Kanals (15) angeordnet ist.

4. Befestiger nach Anspruch 3, **dadurch gekennzeichnet, dass**
der Kontaktbereich (16) mit dem Verbindungsabschnitt (18) und dem Umlenkabschnitt (17) in Richtung der Längsachse (L) des Befestigers (1) einen Teil eines V-förmigen, U-förmigen, rautenförmigen, teilkreisförmigen oder teilellipsenförmigen Abschnitts formt.

5. Befestiger nach einem der Ansprüche 1 bis 4, **dadurch gekennzeichnet, dass**
der weitere Eingriffsabschnitt (23) mit dem Kontaktbereich (16) mittels eines sich durch ein Fenster (20) eines der Schenkel (7, 8) des Befestigers (1) erstreckenden weiteren Verbindungsabschnitts (19) verbunden ist.

6. Befestiger nach Anspruch 5, **dadurch gekennzeichnet, dass**
das Fenster (20) in einem zur Längsachse (L) des Befestigers (1) einen Winkel ungleich 0° aufweisenden Abschnitt (21) eines Schenkels (7, 8) ausgebildet ist.

7. Befestiger nach einem der Ansprüche 1 bis 6, **dadurch gekennzeichnet, dass**
der Abstand des Eingriffsabschnitts (12) von einer Mittelachse des Befestigers (1) größer ist als der Abstand des weiteren Eingriffsabschnitts (23) von der Mittelachse des Befestigers (1).

8. Befestiger nach einem der Ansprüche 1 bis 7, **dadurch gekennzeichnet, dass**
der Befestiger (1) eine sich in den Kanal (15) erstreckende rinnenförmige Vertiefung (22) oder Sicke oder Rastnase aufweist.

9. System, umfassend einen Befestiger (1) nach einem der Ansprüche 1 bis 8 und ein Halteelement (2), wobei der Abstand zwischen dem Eingriffsabschnitt (12) und dem Kontaktbereich (16) in Längsrichtung des Befestigers (1) an einen Abstand zwischen einer Kontaktfläche des Halteelements (2), an der der Eingriffsabschnitt (12) anliegen kann, und einem an einem von dem Kanal (15) aufzunehmenden Abschnitt (14) des Halteelements (2) vorgesehenen Rastelement (26) angepasst ist, an welchem der Kontaktbereich (16) anliegt.

10. System nach Anspruch 9, **dadurch gekennzeichnet, dass**
der im Kanal (15) vorliegende Abschnitt (14) des Halteelements (2) derart an den Befestiger (1) angepasst ist, dass sowohl eine Anlage des Abschnitts an dem Kontaktbereich (16) und einem dem Kontaktbereich zugewandten Bereich eines Schenkels (7, 8) im Abschnitt (21) des Befestigers (1) ermöglicht ist.

11. System nach einem der Ansprüche 9 oder 10, **dadurch gekennzeichnet, dass** ein Rastabschnitt durch eine im Winkel zur Längsachse (L) des Befestigers (1) verlaufende Rastrampe (10a) gebildet wird, die sich im Vergleich zum Eingriffsabschnitt (12) auf der anderen Seite des Kontaktbereichs (16) befindet und eine Oberfläche aufweist, die der in Kontakt mit der Kontaktfläche des Halteelements (2) kommenden Oberfläche des Eingriffsabschnitt (12) zugewandt ist.

12. System nach Anspruch 11 **dadurch gekennzeichnet, dass** ein Fangabschnitt (11) vorgesehen ist, der eine Oberfläche aufweist, die der in Kontakt mit der Kontaktfläche des Halteelements (2) kommenden Oberfläche des Eingriffsabschnitt (12) zugewandt ist, wobei der Fangabschnitt in Vergleich zum Rastabschnitt (10) weiter entfernt entlang der Längsachse (L) vom Eingriffsabschnitt (12) angeordnet ist.

## Claims

1. Fastener (1) for securing a retaining element (2) on a support (3), wherein
the fastener (1) is formed in the manner of a retaining clip and has at least one limb (7, 8) and at least one engaging portion (12), wherein the engaging portion (12) extends outward from the longitudinal axis (L) of the fastener (1) and is designed to engage with the retaining element (2), and
the limb (7, 8) has at least one latching portion (10) to hold back the retaining element (2) on a support (3), wherein
the fastener (1) has a channel (15) for receiving a portion (14) of the retaining element (2), wherein
the fastener (1) has at least one contact region (16) for contact with the retaining element (2), which is positioned at least partially within the channel (15), and
the contact region (16) is connected to the engaging portion (12) by means of a connecting portion (18), wherein
the contact region (16) extends at an angle greater than 0° and less than 90° to the longitudinal axis of the channel (15),
**characterised in that**
the engaging portion (12) is designed to allow a movement of the fastener (1) relative to the retaining element (2) in the direction of the longitudinal axis (L) of the fastener (1), and a further engaging portion (23) which extends outward is provided as a catch portion for the movement of the fastener (1) relative to the retaining element (2), wherein the further engaging portion (23) adjoins the contact region (16).

2. Fastener according to claim 1, **characterised in that**
the engaging portion (12) forms an angle of less than or equal to 90° together with the longitudinal axis (L) of the fastener (1).

3. Fastener according to claim 1 or 2, **characterised in that**
the contact region (16) has a deflecting portion (17), or a deflecting portion (17) adjoins the contact region (16), wherein the deflecting portion (17) is arranged in the region of the channel (15).

4. Fastener according to claim 3, **characterised in that**
the contact region (16) forms, together with the connecting portion (18) and the deflecting portion (17), in the direction of the longitudinal axis (L) of the fastener (1), a part of a V-shaped, U-shaped, diamond-shaped, circular-arc- or elliptical-arc-shaped portion.

5. Fastener according to any of claims 1 to 4, **characterised in that**
the further engaging portion (23) is connected to the contact region (16) by means of a further connecting portion (19) which extends through a window (20) of one of the limbs (7, 8) of the fastener (1).

6. Fastener according to claim 5, **characterised in that**
the window (20) is formed in a portion (21) of a limb (7, 8) which has an angle not equal to 0° relative to the longitudinal axis (L) of the fastener (1).

7. Fastener according to any of claims 1 to 6, **characterised in that**
the distance of the engaging portion (12) from a central axis of the fastener (1) is greater than the distance of the further engaging portion (23) from the central axis of the fastener (1).

8. Fastener according to any of claims 1 to 7, **characterised in that**
the fastener (1) has a groove-shaped recess (22) or bead or detent lug extending into the channel (15).

9. System comprising a fastener (1) according to any of claims 1 to 8, and a retaining element (2), wherein the distance between the engaging portion (12) and the contact region (16) in the longitudinal direction of the fastener (1) is adapted to a distance between a contact surface of the retaining element (2) against which the engaging portion (12) can rest, and a latching element (26) against which the contact region (16) rests and which is provided on a portion (14) of the retaining element (2) to be received by the channel (15).

10. System according to claim 9, **characterised in that** the portion (14) of the retaining element (2) located in the channel (15) is adapted to the fastener (1) in such a way that contact of the portion on the contact region (16), and also on a region of the limb (7, 8) facing the contact region in the portion (21) of the fastener (1) is made possible.

11. The system according to any of claims 9 or 10, **characterised in that** latching portion is formed by a latching ramp (10a) which extends at an angle to the longitudinal axis (L) of the fastener (1), and which is located on the other side of the contact region (16) in comparison with the engaging portion (12), and has a surface facing the surface of the engaging portion (12) coming into contact with the contact surface of the retaining element (2).

12. The system according to claim 11, **characterised in that** a catch portion (11) is provided which has a surface which faces the surface of the engaging portion (12) coming into contact with the contact surface of the retaining element (2), wherein the catch portion is arranged farther along the longitudinal axis (L) from the engaging portion (12) in comparison to the latching portion (10).

## Revendications

1. Dispositif de fixation (1) servant à fixer un élément de retenue (2) à un support (3), dans lequel
le dispositif de fixation (1) est conçu sous forme d'étrier de retenue et comprenant au moins une branche (7, 8) et au moins une première partie d'entrée en prise (12), la partie d'entrée en prise (12) s'étendant vers l'extérieur à partir de l'axe longitudinal (L) du dispositif de fixation (1) et étant conçue pour venir en prise avec l'élément de retenue (2), et
la branche (7, 8) comprend au moins une partie d'encliquetage (10) servant à retenir l'élément de retenue (2) sur un support (3), dans lequel
le dispositif de fixation (1) présente un conduit (15) destiné à recevoir une section (14) de l'élément de retenue (2), dans lequel
le dispositif de fixation (1) présente au moins une zone de contact (16) pour un contact avec l'élément de retenue (2), qui est positionnée au moins partiellement dans le conduit (15), et
la zone de contact (16) est reliée à la partie d'entrée en prise (12) au moyen d'une partie de liaison (18), dans lequel
la zone de contact (16) s'étend selon un angle supérieur à 0° et inférieur à 90° par rapport à l'axe longitudinal du conduit (15),
**caractérisé en ce que**
la partie d'entrée en prise (12) est conçue pour permettre un mouvement relatif du dispositif de fixation (1) par rapport à l'élément de retenue (2) dans la direction de l'axe longitudinal (L) du dispositif de fixation (1), et une autre partie d'entrée en prise (23) s'étendant vers l'extérieur est prévue comme élément d'arrêt pour le mouvement relatif du dispositif de fixation (1) par rapport à l'élément de retenue (2), l'autre partie d'entrée en prise (23) se raccordant à la zone de contact (16).

2. Dispositif de fixation selon la revendication 1, **caractérisé en ce que**
la partie d'entrée en prise (12) forme un angle inférieur ou égal à 90° avec l'axe longitudinal (L) du dispositif de fixation (1).

3. Dispositif de fixation selon la revendication 1 ou 2, **caractérisée en ce que**
la zone de contact (16) présente une section de renvoi (17) ou une section de renvoi (17) se raccorde à la zone de contact (16), la section de renvoi (17) étant disposée dans la zone du conduit (15).

4. Dispositif de fixation selon la revendication 3, **caractérisé en ce que**
la zone de contact (16) forme avec la section de liaison (18) et la section de renvoi (17), dans la direction de l'axe longitudinal (L) du dispositif de fixation (1), une partie d'une section en forme de V, en forme de U, en forme de losange, en forme de cercle partiel ou en forme d'ellipse partielle.

5. Dispositif de fixation selon l'une quelconque des revendications 1 à 4, **caractérisé en ce que**
l'autre partie d'entrée en prise (23) est reliée à la zone de contact (16) au moyen d'une autre section de liaison (19) s'étendant à travers une fenêtre (20) de l'une des branches (7, 8) du dispositif de fixation (1).

6. Dispositif de fixation selon la revendication 5, **caractérisé en ce que**
la fenêtre (20) est réalisée dans une section (21) d'une branche (7, 8) présentant un angle différent de 0° par rapport à l'axe longitudinal (L) du dispositif de fixation (1).

7. Dispositif de fixation selon l'une quelconque des revendications 1 à 6, **caractérisé en ce que**
la distance de la partie d'entrée en prise (12) par rapport à un axe central du dispositif de fixation (1) est supérieure à la distance de l'autre partie d'entrée en prise (23) par rapport à l'axe central du dispositif de fixation (1).

8. Dispositif de fixation selon l'une quelconque des revendications 1 à 7, **caractérisé en ce que**
le dispositif de fixation (1) présente un évidement (22) en forme de rainure ou une moulure ou un bec d'encliquetage s'étendant dans le conduit (15).

9. Système comprenant un dispositif de fixation (1) selon l'une quelconque des revendications 1 à 8 et un élément de retenue (2), dans lequel la distance entre la partie d'entrée en prise (12) et la zone de contact (16) dans la direction longitudinale du dispositif de fixation (1) est adaptée à une distance entre une surface de contact de l'élément de retenue (2), contre laquelle la partie d'entrée en prise (12) peut venir en butée, et un élément d'encliquetage (26) prévu sur une section (14) de l'élément de retenue (2) devant être reçue par le conduit (15) et contre lequel la zone de contact (16) vient en butée.

10. Système selon la revendication 9, **caractérisé en ce que**
la section (14) de l'élément de retenue (2) présente dans le conduit (15) est adaptée au dispositif de fixation (1) de telle sorte qu'un appui de la section sur la zone de contact (16) et sur une zone d'une branche (7, 8) tournée vers la zone de contact dans la section (21) du dispositif de fixation (1) est possible.

11. Système selon l'une des revendications 9 ou 10, **caractérisé en ce qu'**une section d'encliquetage est formée par une rampe d'encliquetage (10a) s'étendant selon un angle par rapport à l'axe longitudinal (L) du dispositif de fixation (1), située de l'autre côté de la zone de contact (16) par rapport à la partie d'entée en prise (12) et présentant une surface tournée vers la surface de la partie d'entrée en prise (12) venant en contact avec la surface de contact de l'élément de retenue (2).

12. Système selon la revendication 11, **caractérisé en ce qu'**il est prévu une section d'arrêt (11) qui présente une surface qui fait face à la surface de la partie d'entrée en prise (12) venant en contact avec la surface de contact de l'élément de retenue (2), la section d'arrêt étant disposée plus loin le long de l'axe longitudinal (L) de la partie d'entrée en prise (12) par rapport à la section d'encliquetage (10).
